# EUROPEAN PATENT SPECIFICATION

(11) **EP 2 638 476 B1**
(45) Date of publication and mention of the grant of the patent: **30.12.2020**
(21) Application number: 11839861.9
(22) Date of filing: 10.11.2011
(51) Int. Cl.: G06F 9/455, G06F 12/0866, G06F 12/0897

(54) **METHOD AND APPARATUS OF ACCESSING DATA OF VIRTUAL MACHINE**
VERFAHREN UND VORRICHTUNG ZUM ZUGREIFEN AUF DATEN EINER VIRTUELLEN MASCHINE
PROCÉDÉ ET APPAREIL PERMETTANT D'ACCÉDER À DES DONNÉES D'UNE MACHINE VIRTUELLE

(30) Priority: 12.11.2010 CN 201010542916
(43) Date of publication of application: 18.09.2013
(73) Proprietor: Alibaba Group Holding Limited, Grand Cayman (KY)
(72) Inventor: QUAN, Xiao, Fei, Hangzhou 310013 (CN)
(74) Representative: Barker Brettell LLP
(86) International application number: PCT/US2011/060271
(87) International publication number: WO 2012/065005

(56) References cited:
- US-A1- 2008 291 827
- US-A1- 2009 307 688
- US-B1- 7 606 868
- US-B1- 7 606 868
- US-B2- 7 793 307

## Description

### TECHNICAL FIELD

This disclosure relates to the field of computer technologies. More particularly, the disclosure relates to a method and device for accessing data on a virtual machine.

### BACKGROUND

A virtual machine (VM) is a computer system that simulates functions of a complete hardware system by using software, and operates in an isolated environment. By implementing VM technologies, a physical computer may emulate one or more virtual computers. Like a physical computer, a VM may, for example, install operating systems as well as applications and accesses the Internet resources.

In general, data of a VM is stored in a virtual disk of the VM. The virtual disk is stored in a physical disk of a local physical computer in the form of mirror documents, logic virtual volumes, logic disks or logic disk partitions. The VM may access the data by accessing the physical disk of the local computer. This may present problems, for example, when the local computer is shut down or damaged.

US 7,606,868 (B1) discloses an architecture and system that provide a unified file access service in a managed computing environment composed of diverse networks, computing devices, and storage devices. The service provides mechanisms for remotely accessing the file systems of any managed computer or disk snapshot, independently of the computer's current state (powered on, suspended or powered off), its location within the environment, its hardware type (virtual vs. physical), its operating system type, and its file system formats. The system isolates centralized FPAs from the details of clients, proxies and storage elements by providing a service that decomposes offloaded file system access into two steps. A FPA or a requester acting on behalf of the FPA first expresses the disk set or the computer containing the file systems it wishes to access, along with requirements and preferences about the access method. The service determines a data path satisfying the FPA's needs, and then automatically configures a set of storage and computing resources to provide the data path. The service then replies with information about the resources and instructions for using them. The FPA then accesses the requested file systems using the returned information.

### SUMMARY

This disclosure provides methods and devices for accessing virtual machine (VM) data as defined in the appended independent claims, preferred embodiments are defined in the appended dependent claims.

### BRIEF DESCRIPTION OF THE DRAWINGS

The Detailed Description is described with reference to the accompanying figures. The use of the same reference numbers in different figures indicates similar or identical items.
**Fig. 1** is a schematic block diagram showing details of an exemplary computing device for accessing data of a virtual machine (VM). Fig. 2 is a schematic diagram showing an exemplary environment for accessing data of a VM.
Fig. 2 is a schematic diagram showing an exemplary environment for accessing data of a VM.
Fig. 3 is a schematic block diagram showing an exemplary mapping relationship.
Fig. 4 is a schematic block diagram showing details of another exemplary computing device for accessing data of a VM.
Fig. 5 is a schematic block diagram showing details of yet another exemplary computing device for accessing data of a VM.
Fig. 6 is a schematic block diagram showing details of still another exemplary computing device for accessing data of a VM.
Fig. 7 is a schematic block diagram showing an exemplary mapping relationship between virtual disks and physical storage.
Fig. 8 is a flowchart showing an exemplary process of accessing data of a VM.
Fig. 9 is a flowchart showing another exemplary process of accessing data of a VM.
Fig. 10 is a flowchart showing yet another exemplary process of accessing data of a VM.
Fig. 11 is a schematic block diagram showing details of an exemplary system for accessing data of a single VM.
Fig. 12 is a schematic block diagram showing details of an exemplary system for accessing data of parallel VMs.
Fig. 13 is a schematic block diagram showing details of an exemplary system for implementing a VM migration.
Fig. 14 is a schematic block diagram showing details of an exemplary system for accessing data of VMs by implementing shared storage.

### DETAILED DESCRIPTION

As discussed above, under conventional virtual machine (VM) technologies, the state of local physical computers may affect security and reliability of data of VMs. Because of security and reliability concerns, development and applications of VM techniques are dramatically limited. This disclosure describes various exemplary ways of improving security and reliability of accessing VM data, for example, by mapping virtual storage of a virtual disk to physical storage of a distributed storage system. This disclosure may provide a data transmission channel between a VM and a distributed storage system, and, therefore, provide overall, consistent, complete, high-efficient, secured, and compatible data access services.

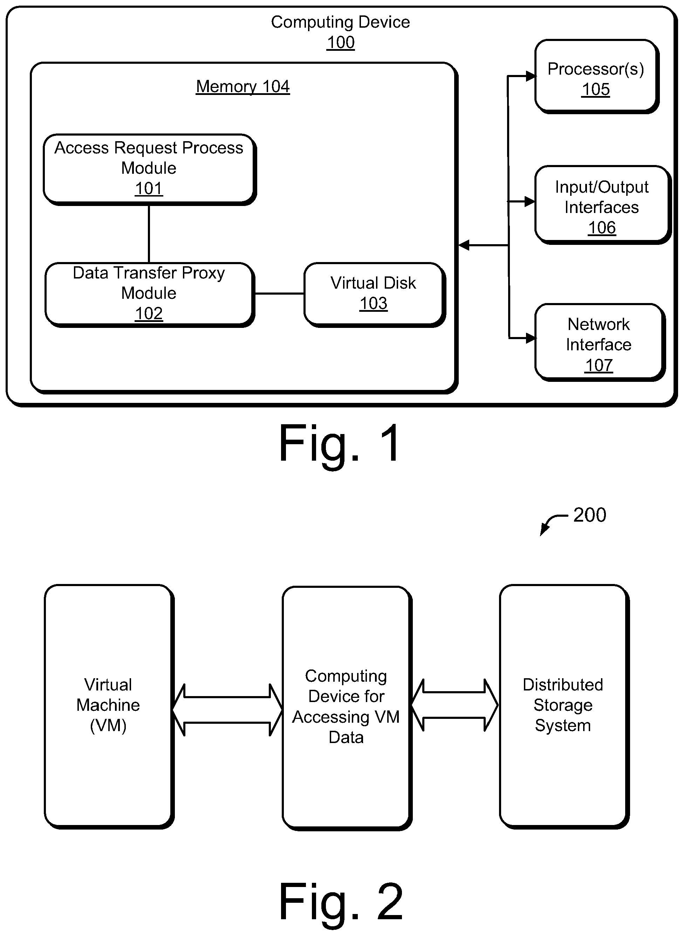

Fig. 1 is a schematic block diagram showing details of the exemplary computing device 100 for accessing data of a VM. The computing device 100 may be configured as any suitable device. In one exemplary configuration, the computing device 100 includes one or more processors 105, input/output interfaces 106, network interface 107, and memory 104.

The memory 104 may include computer-readable media in the form of volatile memory, such as random-access memory (RAM) and/or non-volatile memory, such as read only memory (ROM) or flash RAM. The memory 104 is an example of computer-readable media.

Computer-readable media includes volatile and non-volatile, removable and non-removable media implemented in any method or technology for storage of information such as computer readable instructions, data structures, program modules, or other data. Examples of computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device. As defined herein, computer-readable media does not include transitory media such as modulated data signals and carrier waves.

Turning to the memory 104 in more detail, the memory 104 may store an access request process module 101, a data transfer proxy module 102 and a virtual disk 103, and one or more applications for implementing all or a part of accessing data of a VM (not shown in Fig. 1). The access request process module 101 receives a data access request from a VM and adds the data access request to a request array. In some embodiments, the data access request maps to a virtual storage unit of the virtual disk 103, and the virtual storage unit maps to a physical storage unit of a distributed storage system (See Fig. 2).

The data transfer proxy module 102 obtains the data access request from the request array, maps the data access request to a corresponding virtual storage unit, and maps the virtual storage unit to a corresponding physical storage unit of the distributed storage system. In some embodiments, the data transfer proxy module 102 may, based on a type of the data access request, perform operations on corresponding data on the physical storage unit of the distributed storage system.

Suppose that the type of obtained data access request is "write data" and that the mapped physical storage unit information is sent to the distributed storage system. As a result, the distributed storage system operates "write data" based on the physical storage unit information. If the type of obtained data access request is "read data," the data is read from the distributed storage system based on the physical storage unit information, and the data can be fed back to the VM.

Fig. 2 is a schematic diagram showing an exemplary environment 200 that may include a virtual machine, a computing device (e.g., the computing device 100) and a distributed storage system. Data in a virtual disk of a VM can be saved in physical disks of multiple physical computers in a distributed storage system based on the mapping techniques. As a result, a backup associated with the VM data can be implemented, and the security and the reliability of the stored VM data can be improved.

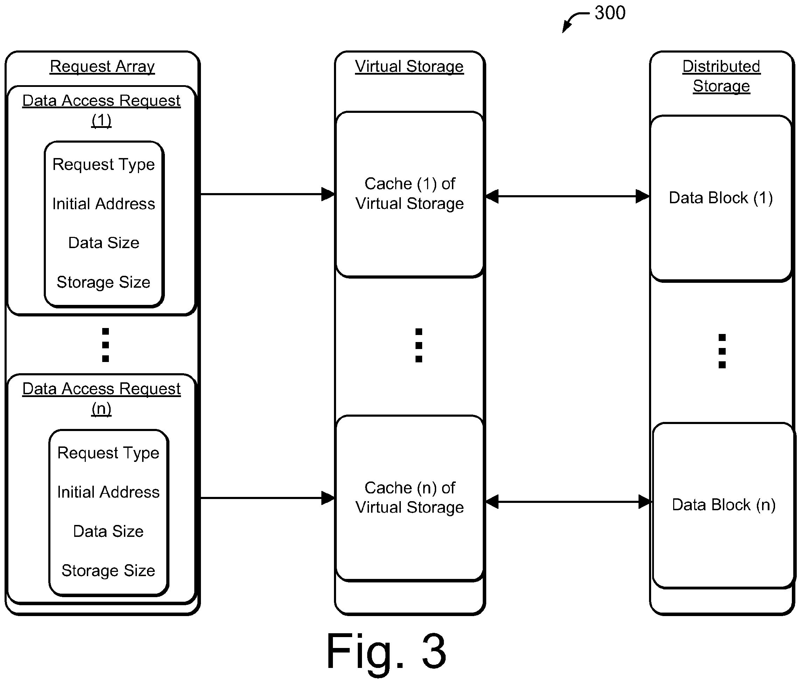

Fig. 3 is a schematic block diagram showing an exemplary mapping relationship 300. In some embodiments, the data access request in the request array is mapped to a virtual storage unit in a virtual disk, and the virtual storage unit further is mapped to a physical storage unit in a distributed storage system. As shown in Fig. 3, the data access request may include a request type, an initial address of data, a data size, and an address size. The request type indicates a requested operation on the data (e.g., read, write or delete). The initial address of data indicates an initial address of the data in the virtual storage unit of the virtual disk of to which the data access request accesses. A virtual storage size of data may be obtained based on the initial address of data and the size of data. The storage size indicates a storage size for caching data associated with the data access request in memory of a physical computer associated with the VM.

A virtual storage unit mapped to a data access request can be determined based on the initial address of the data and the size of the data associated with the data access request. The virtual storage unit is configured to save the data associated with the data access request. Based on the virtual storage unit and the associated mapping relationship, a physical storage unit of the distributed storage system can be determined. The physical storage unit associated with the data access request is determined based on the initial address and the size of the data associated with the data access request. A data access channel from the VM to the distributed storage system is then established, and, therefore, the data access from the VM to the distributed storage system can be implemented.

In some embodiments, the data transfer proxy module 102 may obtain individual data access requests from a request array, for example, after getting notification from the access request process module 101. The data transfer proxy module 102 may actively access the request array periodically to obtain data access requests. The data access requests are then firstly mapped to corresponding virtual storage units, which are further mapped to corresponding physical storage units of a distributed storage system. The physical storage units can be determined based on the mapping techniques. As accessing VM data described in this disclosure requires merely a mapping relationship without copying data, system resources can be saved by using less time and storage.

In some embodiments, a request array may correspond to a thread with respect to multithreading applications. Suppose that 16 threads are concurrently activated and that each thread implements functions of the data transfer proxy module 102. As a result, 16 data transfer proxy modules can be concurrently activated in the computing device 100 for accessing data of a VM.

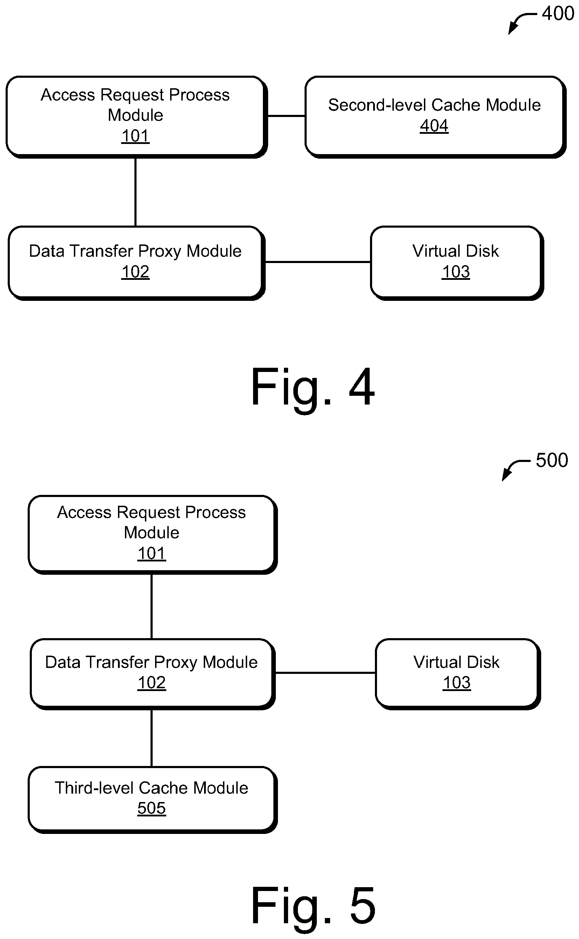

Fig. 4 is a schematic block diagram showing details of an exemplary computing device 400 that may include, similar to the device of Fig. 1, the access request process module 101, the data transfer proxy module 102, and the virtual disk 103. In this Fig. 4 implementation, the computing device 400 further includes a second-level cache module 404. In some embodiments, the access request process module 101 determines whether a second-level cache stores the data associated with the data access request after the access request process module 101 receives the data read request from a VM. If yes, the data can be read from the cache directly. If no, the access request process module adds the data access request to a request array. After the data transfer proxy module 102 reads data, the second-level cache module 404 creates a second-level cache slot to store the data.

For example, when the access request process module 101 receives a data read request (e.g., a data access request indicating to read data A), the access request process module 101 searches a second-level cache. If the second-level cache stores data A, data A is read from the second-level cache directly. Otherwise, the data read request is added to the request array so that data A can be read from a distributed storage system based on the mapping techniques. After the data transfer proxy module 102 reads data A, the second-level cache module 404 creates a second-level cache slot to store data A. In some embodiments, the second-level cache slot is created in advance, and a cache item A is created in the second-level cache slot for data A. The cache item A created for data A is then added to a cache pool of the second-level cache. Therefore, when the data transfer proxy module 102 reads new data, the second-level cache module 404 creates a new cache item in the second-level cache and adds the new cache item into the cache pool of the second-level cache.

In some embodiments, the second-level cache is physical memory of a local physical computer, expediting accessing data of a VM. In some embodiments, data in a virtual disk of a VM can be saved in physical disks of multiple physical computers of a distributed storage system based on the mapping techniques, improving security and reliability of data stored in a VM. In some embodiments, reading data and caching the data in a front-end strategy system can be conducted at the same time to further increase the speed of accessing data of a VM.

Fig. 5 is a schematic block diagram showing details of an exemplary computing device 500 that. Similar to the devices of Figs. 1 and 4, may include the access request process module 101, the data transfer proxy module 102, and the virtual disk 103. In the Fig. 5 implementation, the device 500 also includes a third-level cache module 505. In some embodiments, the data transfer proxy module 102 determines whether the cache stores the data associated with a data access request after the data transfer proxy module 102 obtains the data read request from the request array. If yes, the data can be read from the cache slot directly. If no, the data transfer proxy module 102 maps the data read request to a corresponding virtual storage unit and maps the virtual storage space to a corresponding physical storage unit. After the data transfer proxy module 102 reads data, the third-level cache module 505 creates a third-level cache slot to store the data. In some embodiments, the data transfer proxy module 102 may further perform operations on the data associated with the data access request.

For example, when the data transfer proxy module 102 obtains a data read request (e.g., a data access request indicating to read data C), the data transfer proxy module 102 searches a third-level cache. If the third-level cache retains data C, data C is read from the third-level cache directly. Otherwise, the obtained data read request is mapped to a corresponding virtual storage unit that is further mapped to a corresponding physical storage unit. After the data transfer proxy module 102 reads data C, the third-level cache module 505 creates a third-level cache slot to store data C. In some embodiments, the third-level cache slot is created in advance, and a cache item C is created in the third-level cache slot for data C. The cache item C is then added to a cache pool of the third-level cache. Therefore, when the data transfer proxy module 102 reads new data, the third-level cache module 505 creates a new cache item in the third-level cache and adds the new cache item into the cache pool of the third-level cache.

In some embodiments, the third-level cache slot is physical memory of a local physical computer, expediting accessing data of a VM. In some embodiments, the computer device 500 may include both the second-level cache module 404 and the third-level cache module 505. In this situation, the access request reaches the access request process module 101 first, and processing memory data is faster than processing disk data. As a result, the second-level cache slot may be located in physical memory of a local physical computer, and the third-level cache slot may be located in a physical disk of a local physical computer to further expedite accessing data of a VM. In some embodiments, data in a virtual disk of a VM can be saved in physical disks of multiple physical computers of a distributed storage system based on the address mapping. Therefore, security and reliability of stored VM data can be improved. In some embodiments, reading data and caching the data in a back-end strategy system can be conducted at the same time to further increase the speed of accessing data of a VM.

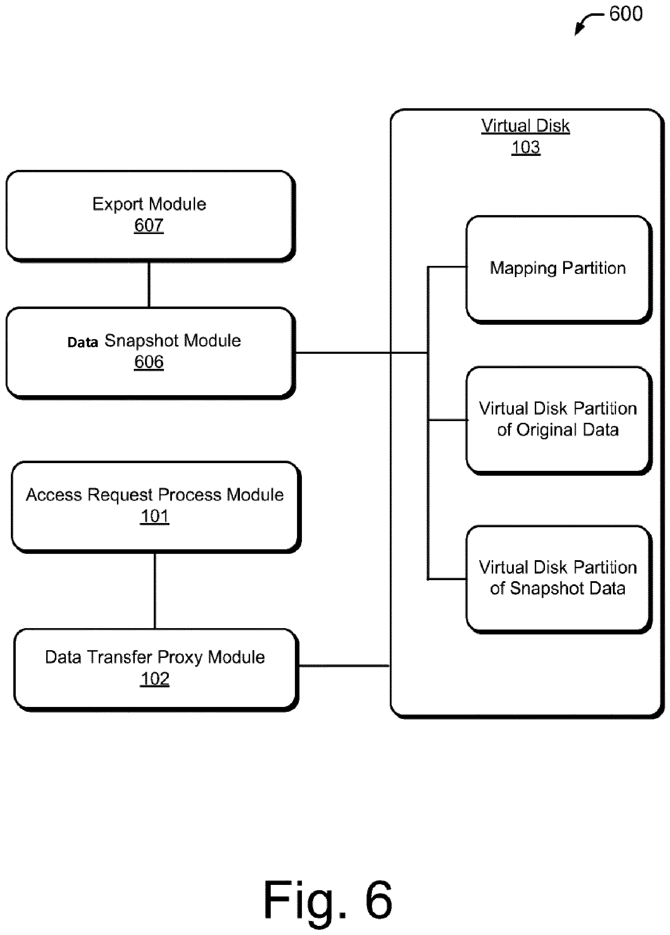

Fig. 6 is a schematic block diagram showing details of another possible implementation of an exemplary computing device 600. The computing device 600 includes an access request process module 101, a data transfer proxy module 102, a virtual disk 103, and a data snapshot module 606. As shown in Fig. 6, the virtual disk 103 may include a virtual disk partition of original data, a virtual disk partition of snapshot data and a mapping partition. In some embodiments, data in a virtual disk can be saved as snapshot data at a certain time to backup the data in other storage. The data snapshot module 606 obtains a virtual storage slot of the virtual disk partition of original data and a virtual storage slot of the virtual disk partition of snapshot data from the mapping partition.

In some embodiments, the computing device 600 may include the export module 607 that maps the virtual storage slot of the original data and the virtual storage slot of the snapshot data that is obtained by the data snapshot module 606 to corresponding physical storage units of a distributed storage system.

In some embodiments, the computing device 600 includes an import module (not shown) that maps physical storage units of the distributed storage system to virtual disk partitions of original data and virtual disk partitions of snapshot data, after an import request is received. For example, when original data and snapshot data in a distributed storage system need to be exported to other VMs, the import module may map physical storage units of the distributed storage system to virtual disk partitions of the original data and virtual disk partitions of the snapshot data in other VMs. As a result, the data is exported to other storage systems.

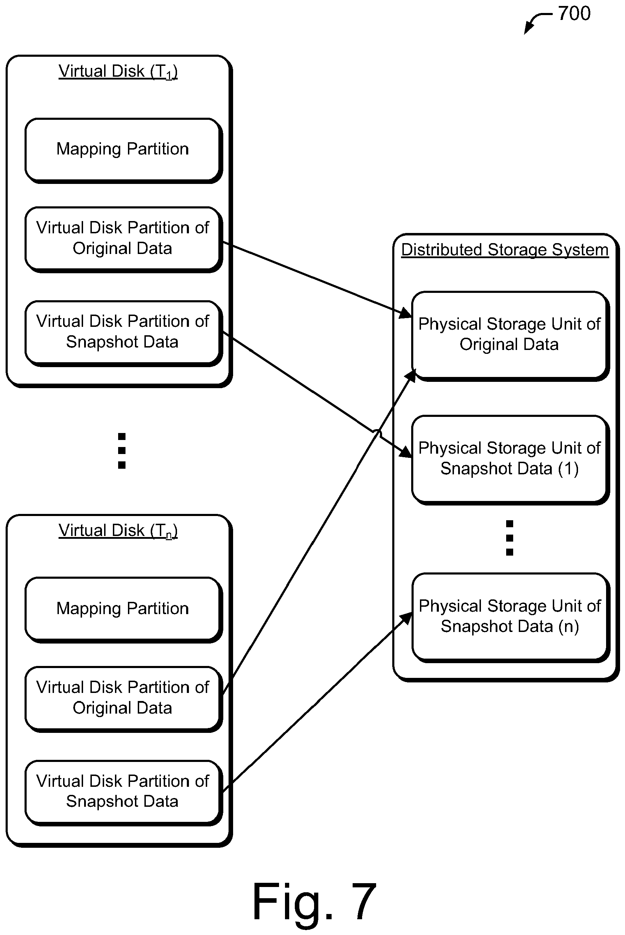

Fig. 7 is a schematic block diagram showing an exemplary mapping relationship between virtual disks and physical storage. In some embodiments, virtual storage units of the virtual disk partition of original data and the virtual disk partition of snapshot data are retained in the mapping partition. The virtual storage units are obtained from the mapping partition when the data snapshot module 606 receives a data snapshot request. The export module 607 maps the virtual storage units to physical storage units of a distributed storage system so that the original data and the snapshot data can be obtained from the physical storage units of the distributed storage system, and that a data snapshot at a certain time can be obtained based on the original data and the snapshot data.

In some embodiments, the sector codes in the device for accessing VM data may include Vm_id, Image_id, Vbd_id, Par_id and Cell_id. Vm_id (32-bit) is the number of a VM; Image_id (32-bit) is the number of an associated mirrored document and can indicate imported snapshot data; Vbd_id (8-bit) is the number of a virtual hard drive; Par_id (8-bit) is the number of a partition; and, Cell_id (64-bit) is the number of a sector. Vm_id, Image_id, Vbd_id and Par_id are configured by a managing system to include information associated with relationship and attribute of a computing device for accessing VM data. In some embodiments, the front-end strategy system combines these codes to uniquely identify sector locations of distributed storage units after receiving the request from an upper-level document system. Then, read/write operations on the sectors are performed based on these codes.

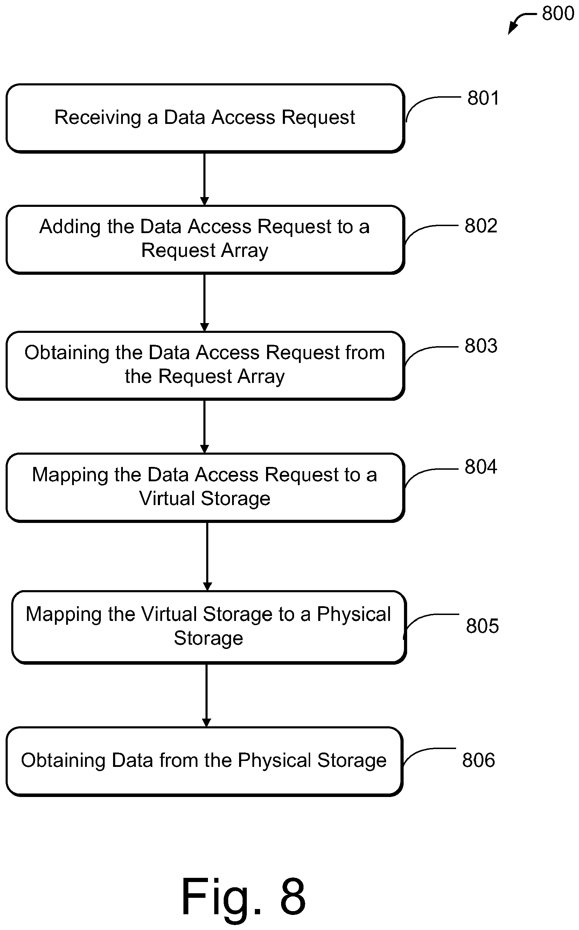

Figs. 8-10 are flowcharts showing exemplary processes of accessing data of a VM. The processes are illustrated as a collection of blocks in logical flowcharts, which represent a sequence of operations that can be implemented in hardware, software, or a combination. For discussion purposes, the processes are described with reference to the computing devices 100, 400, 500 and/or 600 shown in Figs. 1 and 4-6, the computing environment 200 shown in Fig. 2, and the mapping relationships 300 and 700 shown in Figs. 3 and 7. However, the processes may be performed using different environments and devices. Moreover, the environments and devices described herein may be used to perform different processes.

Fig. 8 is a flowchart showing an exemplary process of accessing data of a VM. At 801, the access request process module 101 receives a data access request that is sent by a VM. At 802, the access request process module 101 adds the data access request to a request array. The data access request maps to a virtual storage unit in a virtual disk, and the virtual storage unit maps to a physical storage unit in a distributed storage system. At 803-805, the data transfer proxy module 102 obtains the data access request from the request array, maps the data access request to a corresponding virtual storage unit, and maps the virtual storage unit to a corresponding physical storage unit. At 806, the transfer proxy module 102 may obtain data from the physical storage unit. In some embodiments, 801-806 may be repeated until all data access requests in the request array are processed.

The distributed storage system may operate a corresponding data access operation in the physical storage unit based on a type of data access request. For example, if the type of the obtained data access request is "write data", the distributed storage system operates "write data" based on the physical storage unit information that is sent to the distribution storage system from the computing device 100. If the type of the obtained data access request is "read data", the data is read from the distributed storage system based on the physical storage unit information. As a result, the data can be fed back to the VM associated with the date access request.

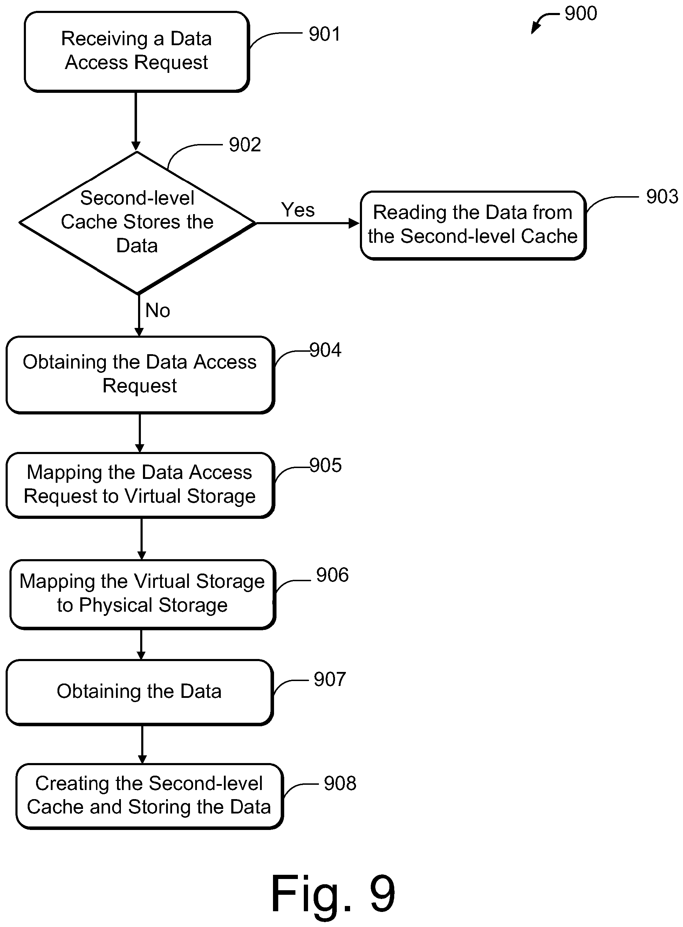

Fig. 9 is a flowchart showing an exemplary process of accessing data of a VM. At 901, the access request module 101 receives a data access request that is sent by a VM. At 902, the access request module 101 determines whether a second-level cache unit stores the data associated with the data access request. If the data is stored (i.e., the "yes" branch from 902), the data transfer proxy module 102 directly reads the data at 903. If the data is not stored (i.e., the "no" branch from 902), the data transfer proxy module 102 obtains the data access request from a request array after the data access request is added to the request array at 904. At 905 and 906, the data transfer proxy module 102 maps the data access request to a corresponding virtual storage unit, and maps the virtual storage unit to a corresponding physical storage unit. At 907, the data transfer proxy module 102 obtains the data associated with the data access request. At 908, the second-level cache module 404 creates a second-level cache slot to store the data. In some embodiments, 901-908 may be repeated until all data access requests in the request array are processed.

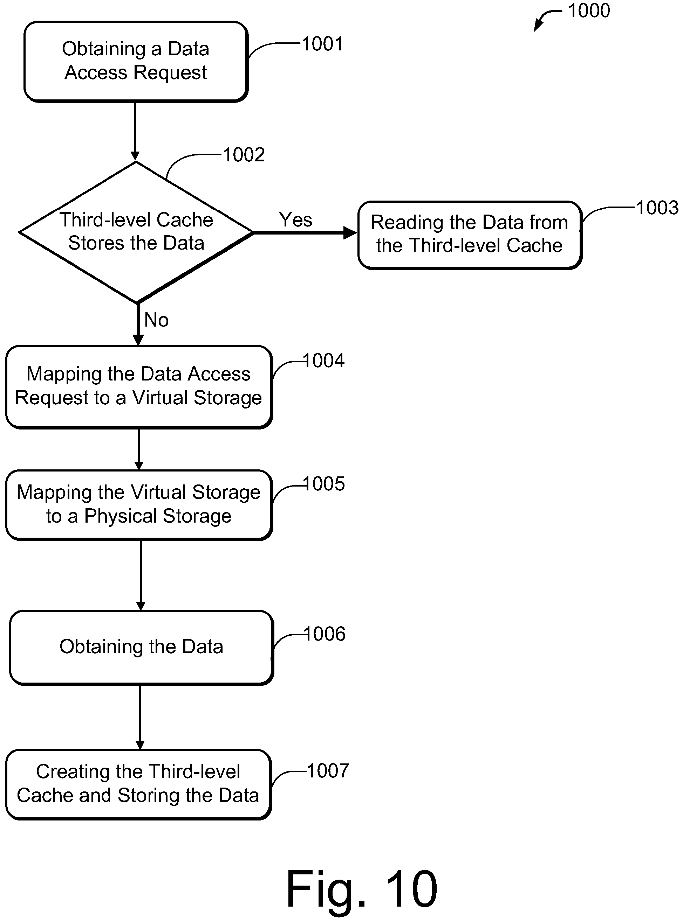

Fig. 10 is a flowchart showing an exemplary process of accessing data of a VM. In some embodiments, to expedite data access processes, a third-level cache may be created after a corresponding data read operation is performed in the mapped physical storage units based on the associated data read request. At 1001, the data transfer proxy module 102 obtains a data access request from a request array. At 1002, the data transfer proxy module 102 determines whether a third-level cache stores the data associated with the data access request. If the data is stored (i.e., the "yes" branch from 1002), the data transfer proxy module 102 reads the data directly from the third-level cache at 1003. If the data is not stored in the third-level cache (i.e., the "no" branch from 1002), the data transfer proxy module 102 maps the data access request to a virtual storage unit, and maps the virtual storage unit to a physical storage unit of a distributed storage system. At 1006, the data transfer proxy module 102 obtains the data from the distributed storage system. At 1007, a third-level cache module creates a third-level cache slot to store the data. In some embodiments, 1001-1007 may be repeated until all data access request in the request array are processed.

In some embodiments, the processes described above may further include obtaining snapshot data associated with the data access request. For example, the data snapshot module 606 may obtain a virtual storage unit of a virtual disk partition of original data and a virtual storage unit of a virtual disk partition of snapshot data from a mapping partition of the virtual disk after a snapshot request is received, map the virtual storage unit of the original data and the virtual storage unit of the snapshot data to corresponding physical storage units of the distributed storage system after an export request is received.

In some embodiments, reading and caching the data associated with the data access request in the front-end strategy system can be conducted at the same time. For example, after the access request process module 101 receives the next data access request, the data associated with the data access request can be read from a cache that stores the data, expediting accessing data of a VM. In some embodiments, reading and caching the data associated with the data access request in the back-end mechanism system can be conducted at the same time. For example, after the data transfer proxy module 102 obtains the next data access request, the data can be read from a cache that stores the data, expediting accessing data of a VM.

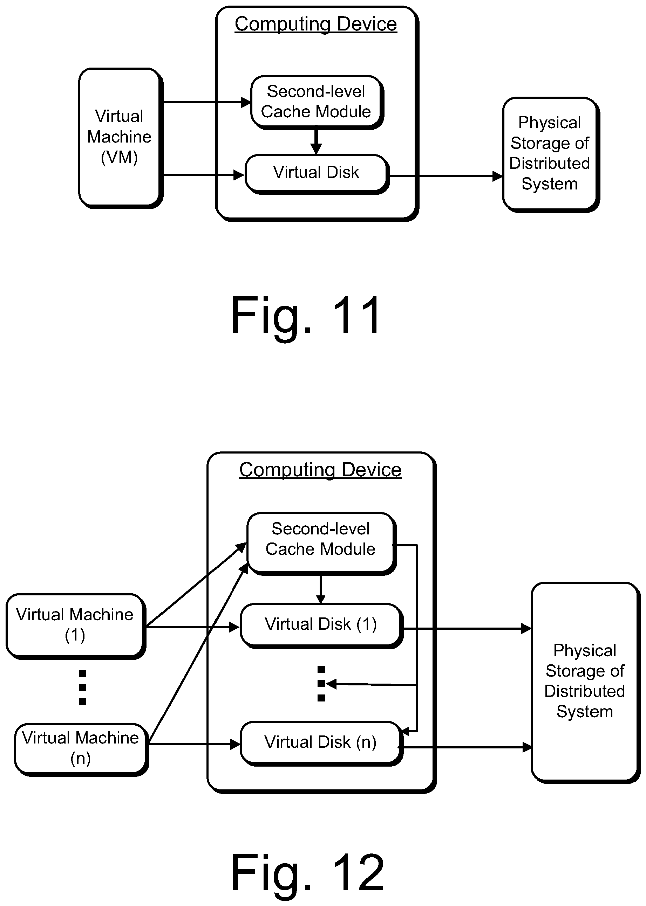

In some embodiments, the processes described above may be performed in different environments and devices, for example, a single virtual machine start, a multiple-machine parallel virtual machines start, a virtual machine migration, and/or shared storage. Figs. 11-14 show four different embodiments to illustrate these four cases.

Fig. 11 is a schematic block diagram showing details of an exemplary system 1100 for accessing data of a single VM. The system 1100 may include a computing device, similar to the devices of Figs. 1, 4 and 5, a VM, and physical storage of a distributed system. By implementing a single virtual machine start, the start time and the response speed of a VM are improved.

Fig. 12 is a schematic block diagram showing details of an exemplary system 1200 for accessing data of parallel VMs. The system 1200 may include a computing device, similar to the devices of Figs. 1, 4 and 5, a plurality of parallel VMs, and physical storage of a distributed system. By implementing a multiple-machine parallel virtual machines start, the start time and the response speed of a VM are improved too.

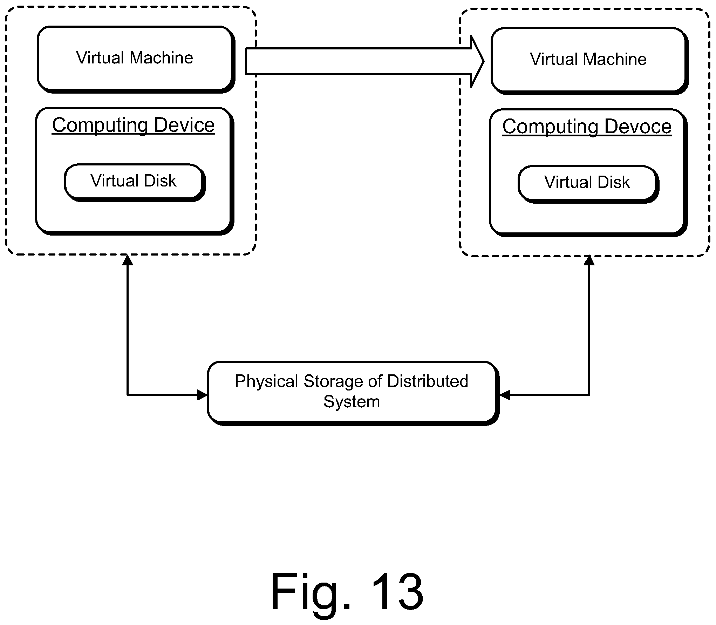

Fig. 13 is a schematic block diagram showing details of an exemplary system 1300 for implementing a VM migration. The System 1300 may include a plurality of computing devices, similar to the devices of Figs. 1, 4 and 5, a plurality of corresponding VMs, and physical storage of a distributed system. By implementing a virtual machine migration, the amount of data migration is reduced and the migration speed is increased.

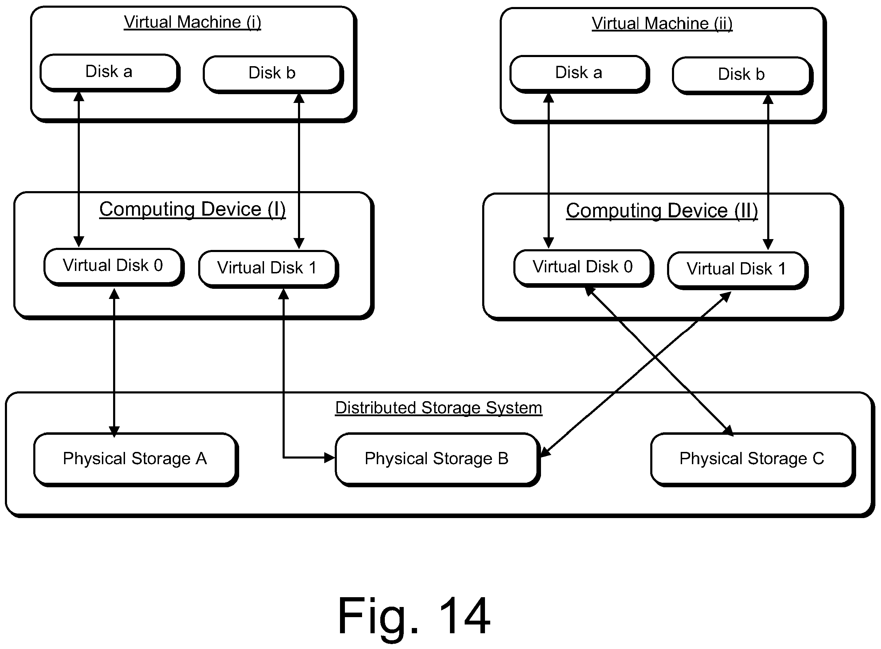

Fig. 14 is a schematic block diagram showing details of an exemplary system 1400 for accessing data of VMs by implementing shared storage. The system 1400 may include a plurality of computing devices, similar to the devices of Figs. 1, 4 and 5, a plurality of corresponding VMs, and a plurality of physical storage units of distributed systems (i.e., physical storage A, B and C). In the system 1400, the distributed systems are installed on servers, and each server node stores data in local hard drives (not shown). Each server node may construct a storage area network (SAN) by employing the plurality of computing devices of Fig. 14 for accessing VM data. Accordingly, SAN shared software may be configured to implement the shared storage devices and to manage data development access in a group. By way of example and not limitation, the SAN shared software may include pNFS/GFS2, and CIFS for Windows system.

## Claims

1. A device (100) for accessing virtual machine data, wherein the virtual machine data is stored in a physical distributed storage system, the device comprising:
memory (104);
one or more processors (105) coupled to the memory (104);
a virtual disk (103), stored in the memory (104), that includes a virtual storage unit (200);
an access request process module (101), stored in the memory (104) and executable by the one or more processors (105), that:
receives a data access request from a virtual machine, and
adds the data access request to a request array (300); and
a data transfer proxy module (102) implemented by a plurality of concurrently activated threads corresponding to the request array, stored in the memory (104) and executable by the one or more processors (105), that:
obtains the data access request from the request array (300), and
maps the data access request to the virtual storage unit (200) of a virtual disk (103) that corresponds to a physical storage unit of a distributed storage system; and
obtains data from the physical storage unit based on the data access request.

2. The device (100) as recited in claim 1, wherein the data transfer proxy module (102) further performs a data access operation on data associated with the data access request based on a request type that is included in the data access request.

3. The device (100) as recited in claim 1, wherein the access request process module (101) further determines that cache storage retains data associated with the data access request after the receiving of the data access request from the virtual machine, and the data transfer proxy module (102) subsequently obtains the data from the cache storage.

4. The device (100) as recited in claim 1, wherein the data transfer proxy module (102) determines that cache storage retains data associated with the data access request after the obtaining of the data access request from the request array (300), and subsequently obtains the data from the cache storage.

5. The device (100) as recited in claim 1, further comprising a cache module (404) stored in the memory (104) and executable by the one or more processors (105), wherein the access request process module (101) determines that cache storage does not store data associated with the data access request after the receiving of the data access request from the virtual machine, and the cache module (404) subsequently creates a cache slot of the cache storage to store the data.

6. The device (100) as recited in claim 1, further comprising a cache module (404) stored in the memory (104) and executable by the one or more processors (105), wherein the data transfer proxy module (102) determines that cache storage does not store data associated with the data access request after the obtaining of the data access request from the request array (300), and the cache module (404) subsequently creates a cache slot of the cache storage to store the data.

7. The device (100) as recited in claim 1, further comprising a data snapshot module (606) stored in the memory (104) and executable by the one or more processors (105), wherein the virtual disk (103) comprises a virtual disk partition of original data, a virtual disk partition of snapshot data and a mapping partition, and the data snapshot module (606) obtains a virtual storage unit of the virtual disk partition of original data and a virtual storage unit of the virtual disk partition of snapshot data from the mapping partition.

8. A computer-implemented method for accessing virtual machine data, wherein the virtual machine data is stored in a physical distributed storage system (200), comprising:
at an access request process module (101):
receiving a data access request from a virtual machine, and
adding the data access request to a request array (300); and
at a data transfer proxy module (102) implemented by a plurality of concurrently activated threads corresponding to the request array:
obtaining the data access request from the request array (300); and
mapping the data access request to a virtual storage unit of a virtual disk (103) that corresponds to a physical storage unit of a distributed storage system; and
obtains data from the physical storage unit based on the data access request.

9. The computer-implemented method as recited in claim 8, further comprising:
mapping the virtual storage unit to physical storage in a distributed storage system (200); and
performing a data operation associated with the data access request.

10. The computer-implemented method as recited in claim 8 or claim 9, wherein at least one of the following applies:
(i) the data access request includes a request type, an initial address of data storage, and a data size, and wherein optionally the performing comprises performing the data operation based on the request type; and
(ii) the method, further comprises:
creating a cache slot to store data associated with the data access request after obtaining the data from the distributed storage system (200) if the data is not stored in cache storage; and
obtaining the data from the cache storage if the data is stored in the cache storage.

11. The computer-implemented method as recited in claim 8, further comprising:
obtaining a virtual storage unit (300) of a virtual disk partition of original data and a virtual storage unit of a virtual disk partition of snapshot data from a mapping partition after a snapshot request is received;
mapping the virtual storage unit (300) of original data and the virtual storage unit of snapshot data to physical storage units of the distributed storage system (200) after an export request is received; and
obtaining the original data and the snapshot data from the distributed storage system (200).

12. One or more computer-readable media encoded with instructions for accessing virtual machine data that, when executed by a processor (105) of a computer, perform acts comprising:
at an access request process module (101):
receiving a data access request from a virtual machine and mapping the data access request to a virtual storage unit of a virtual disk (103) that corresponds to a physical storage unit of a distributed storage system (200); and
adding the data access request to a request array (300),
and, at a data transfer proxy module (102) implemented by a plurality of concurrently activated threads corresponding to the request array:
obtaining the data access request from the request array (300), and
obtaining data from the physical storage unit based on the data access request.

13. The one or more computer-readable media as recited in claim 12, wherein the method further comprises:
creating a front-end cache slot to store the data in response to determination that front-end cache storage does not store the data; and
creating a back-end cache slot to store the data in response to determination that back-end cache storage does not store the data.

14. The one or more computer-readable media as recited in claim 12, wherein the obtaining data, the creating of the front-end cache slot and the creating of the back-end cache slot are performed simultaneously.

15. The one or more computer-readable media as recited in claim 12, further comprising:
obtaining a virtual storage unit of a virtual disk (103) partition of original data and a virtual storage unit of a virtual disk partition of snapshot data from the mapping partition after receiving a data snapshot request;
mapping the virtual storage unit of original data and the virtual storage unit of snapshot data to physical storage units of the distributed storage system (200) after receiving an export request; and
obtaining the original data and the snapshot data from the distributed storage system (200).

## Patentansprüche

1. Vorrichtung (100) zum Zugreifen auf Daten einer virtuellen Maschine, wobei die Daten der virtuellen Maschine in einem physisch verteilten Speichersystem gespeichert sind, und die Vorrichtung umfasst:
Speicher (104);
einen oder mehrere Prozessoren (105), die mit dem Speicher (104) gekoppelt sind;
ein virtuelles Laufwerk (103), das im Speicher (104) gespeichert ist und eine virtuelle Speichereinheit (200) umfasst;
ein Zugriffsanforderungsprozessmodul (101), das im Speicher (104) gespeichert ist und von dem einen oder den mehreren Prozessoren (105) ausgeführt werden kann und das:
eine Datenzugriffsanforderung von einer virtuellen Maschine empfängt, und
die Datenzugriffsanforderung zu einem Anforderungsarray (300) hinzufügt; und
ein Datenübertragungsproxymodul (102), das durch eine Mehrzahl von gleichzeitig aktivierten Threads implementiert ist, die dem Anforderungsarray entspricht, im Speicher (104) gespeichert ist und von dem einen oder den mehreren Prozessoren (105) ausgeführt werden kann und das:
die Datenzugriffsanforderung vom Anforderungsarray (300) erhält, und
die Datenzugriffsanforderung der virtuellen Speichereinheit (200) eines virtuellen Laufwerks (103) zuordnet, die einer physischen Speichereinheit eines verteilten Speichersystems entspricht; und
Daten von der physischen Speichereinheit basierend auf der Datenzugriffsanforderung empfängt.

2. Vorrichtung (100) nach Anspruch 1, wobei das Datenübertragungsproxymodul (102) ferner an Daten, die mit der Datenzugriffsanforderung assoziiert sind, eine Datenzugriffsoperation basierend auf einem Anforderungstyp durchführt, der in der Datenzugriffsanforderung umfasst ist.

3. Vorrichtung (100) nach Anspruch 1, wobei das Zugriffsanforderungsprozessmodul (101) ferner nach dem Empfangen der Datenzugriffsanforderung von der virtuellen Maschine bestimmt, dass ein Cachespeicher Daten aufbewahrt, die mit der Datenzugriffsanforderung assoziiert sind, und das Datenübertragungsproxymodul (102) die Daten anschließend vom Cachespeicher erhält.

4. Vorrichtung (100) nach Anspruch 1, wobei das Datenübertragungsproxymodul (102) nach dem Erhalten von der Datenzugriffsanforderung vom Anforderungsarray (300) bestimmt, dass ein Cachespeicher Daten aufbewahrt, die mit der Datenzugriffsanforderung assoziiert sind, und die Daten anschließend vom Cachespeicher erhält.

5. Vorrichtung (100) nach Anspruch 1, ferner umfassend ein Cachemodul (404), das im Speicher (104) gespeichert ist und von dem einen oder den mehreren Prozessoren (105) ausgeführt werden kann, wobei das Zugriffsanforderungsprozessmodul (101) nach dem Empfangen der Datenzugriffsanforderung von der virtuellen Maschine bestimmt, dass der Cachespeicher keine Daten speichert, die mit der Datenzugriffsanforderung assoziiert sind, und das Cachemodul (404) anschließend einen Cacheslot des Cachespeichers erstellt, um die Daten zu speichern.

6. Vorrichtung (100) nach Anspruch 1, ferner umfassend ein Cachemodul (404), das im Speicher (104) gespeichert ist und von dem einen oder den mehreren Prozessoren (105) ausgeführt werden kann, wobei das Datenübertragungsproxymodul (102) nach dem Erhalten der Datenzugriffsanforderung vom Anforderungsarray (300) bestimmt, dass der Cachespeicher keine Daten speichert, die mit der Datenzugriffsanforderung assoziiert sind, und das Cachemodul (404) anschließend einen Cacheslot des Cachespeichers erstellt, um die Daten zu speichern.

7. Vorrichtung (100) nach Anspruch 1, ferner umfassend ein Datenschnappschussmodul (606), das im Speicher (104) gespeichert ist und von dem einen oder den mehreren Prozessoren (105) ausgeführt werden kann, wobei das virtuelle Laufwerk (103) eine virtuelle Laufwerkpartition von Originaldaten, eine virtuelle Lauwerkpartition von Schnappschussdaten und eine Zuordnungspartition umfasst, und das Schnappschussmodul (606) eine virtuelle Speichereinheit der virtuellen Laufwerkpartition von Originaldaten und eine virtuelle Speichereinheit der virtuellen Laufwerkpartition von Schnappschussdaten von der Zuordnungspartition erhält.

8. Computerimplementiertes Verfahren zum Zugreifen auf Daten einer virtuellen Maschine, wobei die Daten der virtuellen Maschine in einem physisch verteilten Speichersystem (200) gespeichert sind, umfassend:
an einem Zugriffsanforderungsprozessmodul (101):
Empfangen einer Datenzugriffsanforderung von einer virtuellen Maschine, und
Hinzufügen der Datenzugriffsanforderung zu einem Anforderungsarray (300); und
an einem Datenübertragungsproxymodul (102), das durch eine Mehrzahl von gleichzeitig aktivierten Threads implementiert ist, die dem Anforderungsarray entspricht: Erhalten der Datenzugriffsanforderung vom Anforderungsarray (300), und
Zuordnen der Datenzugriffsanforderung zu einer virtuellen Speichereinheit eines virtuellen Laufwerks (103), die einer physischen Speichereinheit eines verteilten Speichersystems entspricht; und
Erhalten von Daten von der physischen Speichereinheit basierend auf der Datenzugriffsanforderung.

9. Computerimplementiertes Verfahren nach Anspruch 8, ferner umfassend:
Zuordnen der virtuellen Speichereinheit zu einem physischen Speicher in einem verteilten Speichersystem (200); und
Durchführen einer mit der Datenzugriffsanforderung assoziierten Datenoperation.

10. Computerimplementiertes Verfahren nach Anspruch 8 oder 9, wobei mindestens eines von Folgendem zutrifft:
(i) die Datenzugriffsanforderung umfasst einen Anforderungstyp, eine anfängliche Datenspeicheradresse und eine Datengröße, und wobei das Durchführen optional ein Durchführen der Datenoperation basierend auf dem Anforderungstyp umfasst; und
(ii) das Verfahren ferner umfasst:
Erstellen eines Cacheslots zum Speichern von Daten, die mit der Datenzugriffsanforderung assoziiert sind, nach dem Erhalten der Daten vom verteilten Speichersystem (200), wenn die Daten nicht im Cachespeicher gespeichert sind; und
Erhalten der Daten vom Cachespeicher, wenn die Daten im Cachespeicher gespeichert sind.

11. Computerimplementiertes Verfahren nach Anspruch 8, ferner umfassend:
Erhalten einer virtuellen Speichereinheit (300) einer virtuellen Laufwerkpartition von Originaldaten und einer virtuellen Speichereinheit einer virtuellen Laufwerkpartition von Schnappschussdaten von einer Zuordnungspartition nach Empfang einer Schnappschussanforderung;
Zuordnen der virtuellen Speichereinheit (300) von Originaldaten und der virtuellen Speichereinheit von Schnappschussdaten zu physischen Speichereinheiten des verteilten Speichersystems (200) nach Empfang einer Exportanforderung; und
Erhalten der Originaldaten und der Schnappschussdaten vom verteilten Speichersystem (200).

12. Ein oder mehrere computerlesbare Medien, die mit Anweisungen zum Zugreifen auf Daten einer virtuellen Maschine codiert sind, die bei Ausführung durch einen Prozessor (105) eines Computers Vorgänge durchführen, die umfassen:
an einem Zugriffsanforderungsprozessmodul (101):
Empfangen einer Datenzugriffsanforderung von einer virtuellen Maschine und Zuordnen der Datenzugriffsanforderung zu einer virtuellen Speichereinheit eines virtuellen Laufwerks (103), die einer physischen Speichereinheit eines verteilten Speichersystems (200) entspricht; und
Hinzufügen der Datenzugriffsanforderung zu einem Anforderungsarray (300),
und an einem Datenübertragungsproxymodul (102), das durch eine Mehrzahl von gleichzeitig aktivierten Threads implementiert ist, die dem Anforderungsarray entspricht:
Erhalten der Datenzugriffsanforderung vom Anforderungsarray (300), und
Erhalten von Daten von der physischen Speichereinheit basierend auf der Datenzugriffsanforderung.

13. Ein oder mehrere computerlesbare Medien nach Anspruch 12, wobei das Verfahren ferner umfasst:
Erstellen eines Front-End-Cacheslots zum Speichern der Daten in Reaktion auf eine Bestimmung, dass der Front-End-Cachespeicher die Daten nicht speichert; und
Erstellen eines Back-End-Cacheslots zum Speichern der Daten in Reaktion auf eine Bestimmung, dass der Back-End-Cachespeicher die Daten nicht speichert.

14. Ein oder mehrere computerlesbare Medien nach Anspruch 12, wobei das Erhalten von Daten, das Erstellen des Front-End-Cacheslots und das Erstellen des Back-End-Cacheslots gleichzeitig durchgeführt werden.

15. Ein oder mehrere computerlesbare Medien nach Anspruch 12, wobei das Verfahren ferner umfasst:
Erhalten einer virtuellen Speichereinheit einer virtuellen Laufwerk(103)-Partition von Originaldaten und einer virtuellen Speichereinheit einer virtuellen Laufwerkpartition von Schnappschussdaten von der Zuordnungspartition nach Empfang einer Schnappschussanforderung;
Zuordnen der virtuellen Speichereinheit von Originaldaten und der virtuellen Speichereinheit von Schnappschussdaten zu physischen Speichereinheiten des verteilten Speichersystems (200) nach Empfang einer Exportanforderung; und
Erhalten der Originaldaten und der Schnappschussdaten vom verteilten Speichersystem (200).

## Revendications

1. Dispositif (100) pour accéder à des données de machine virtuelle, dans lequel les données de machine virtuelle sont stockées dans un système de stockage physique distribué, le dispositif comprenant :
une mémoire (104) ;
un ou plusieurs processeurs (105) couplés à la mémoire (104) ;
un disque virtuel (103), stocké dans la mémoire (104), qui comprend une unité de stockage virtuelle (200) ;
un module de traitement des demandes d'accès (101), stocké dans la mémoire (104) et exécutable par un ou plusieurs processeurs (105), lequel :
reçoit une demande d'accès aux données depuis une machine virtuelle, et
ajoute la demande d'accès aux données à un tableau de demandes (300) ; et
un module mandataire de transfert de données (102) mis en œuvre par une pluralité de fils d'exécution activés simultanément correspondant au tableau de demandes, stockés dans la mémoire (104) et exécutables par un ou plusieurs processeurs (105), lequel :
obtient la demande d'accès aux données à partir du tableau de demandes (300), et
met en correspondance la demande d'accès aux données avec l'unité de stockage virtuelle (200) d'un disque virtuel (103) qui correspond à une unité de stockage physique d'un système de stockage distribué ; et obtient des données de l'unité de stockage physique sur la base de la demande d'accès aux données.

2. Dispositif (100) tel que décrit dans la revendication 1, dans lequel le module mandataire de transfert de données (102) effectue en outre une opération d'accès aux données associée à la demande d'accès aux données sur la base d'un type de demande qui est inclus dans la demande d'accès aux données.

3. Dispositif (100) tel que décrit dans la revendication 1, dans lequel le module de traitement des demandes d'accès (101) détermine en outre que la mémoire cache conserve les données associées à la demande d'accès aux données après la réception de la demande d'accès aux données de la machine virtuelle, et le module mandataire de transfert de données (102) obtient ensuite les données de la mémoire cache.

4. Dispositif (100) tel que décrit dans la revendication 1, dans lequel le module mandataire de transfert de données (102) détermine que la mémoire cache conserve les données associées à la demande d'accès aux données après l'obtention de la demande d'accès aux données du tableau de demandes (300), et obtient ensuite les données de la mémoire cache.

5. Dispositif (100) tel que décrit dans la revendication 1, comprenant en outre un module de mémoire cache (404) stocké dans la mémoire (104) et exécutable par un ou plusieurs processeurs (105), où le module de traitement des demandes d'accès (101) détermine que la mémoire cache ne stocke pas les données associées à la demande d'accès aux données après la réception de la demande d'accès aux données de la machine virtuelle, et le module de mémoire cache (404) crée ensuite un emplacement de cache de la mémoire cache pour stocker les données.

6. Dispositif (100) tel que décrit dans la revendication 1, comprenant en outre un module de mémoire cache (404) stocké dans la mémoire (104) et exécutable par les un ou plusieurs processeurs (105), où le module mandataire de transfert de données (102) détermine que la mémoire cache ne stocke pas les données associées à la demande d'accès aux données après l'obtention de la demande d'accès aux données depuis le tableau de demandes (300), et le module de mémoire cache (404) crée ensuite un emplacement de cache de la mémoire cache pour stocker les données.

7. Dispositif (100) tel que décrit dans la revendication 1, comprenant en outre un module d'aperçu instantané des données (606) stocké dans la mémoire (104) et exécutable par les un ou plusieurs processeurs (105), où le disque virtuel (103) comprend une partition de disque virtuel de données originales, une partition de disque virtuel de données d'aperçu instantané et une partition de mappage, et le module d'aperçu instantané des données (606) obtient une unité de stockage virtuelle de la partition de disque virtuel de données originales et une unité de stockage virtuelle de la partition de disque virtuel de données d'aperçu instantané à partir de la partition de mappage.

8. Procédé mis en œuvre par ordinateur pour accéder à des données de machine virtuelle, dans lequel les données de la machine virtuelle sont stockées dans un système de stockage physique distribué (200), le procédé comprenant les étapes suivantes :
au niveau d'un module de traitement des demandes d'accès (101) :
recevoir une demande d'accès aux données provenant d'une machine virtuelle, et
ajouter la demande d'accès aux données à un tableau de demandes (300) ; et
au niveau d'un module mandataire de transfert de données (102) mis en œuvre par une pluralité de fils d'exécution activés simultanément correspondant au tableau de requêtes :
obtenir la demande d'accès aux données à partir du tableau de demandes (300) ; et
mettre en correspondance la demande d'accès aux données avec une unité de stockage virtuelle d'un disque virtuel (103) qui correspond à une unité de stockage physique d'un système de stockage distribué ; et
obtenir des données de l'unité de stockage physique sur la base de la demande d'accès aux données.

9. Procédé mis en œuvre par ordinateur tel que décrit dans la revendication 8, comprend en outre les étapes suivantes :
mettre en correspondance l'unité de stockage virtuelle avec un stockage physique dans un système de stockage distribué (200) ; et
effectuer une opération sur les données associée à la demande d'accès aux données.

10. Procédé mis en œuvre par ordinateur tel que décrit dans la revendication 8 ou la revendication 9, dans lequel au moins l'un des points suivants s'applique :
(i) la demande d'accès aux données comprend un type de demande, une adresse initiale de stockage des données et une taille des données, et où, éventuellement, l'exécution comprend d'exécuter l'opération sur des données sur la base du type de demande ; et
(ii) le procédé, comprend en outre les étapes suivantes :
créer un emplacement de cache pour stocker les données associées à la demande d'accès aux données après avoir obtenu les données du système de stockage distribué (200) si les données ne sont pas stockées dans la mémoire cache ; et
obtenir les données à partir de la mémoire cache si les données sont stockées dans la mémoire cache.

11. Procédé mis en œuvre par ordinateur tel que décrit dans la revendication 8, comprenant en outre les étapes suivantes :
obtenir une unité de stockage virtuelle (300) d'une partition de disque virtuel de données originales et une unité de stockage virtuelle d'une partition de disque virtuel de données d'aperçu instantané à partir d'une partition de mappage après réception d'une demande d'aperçu instantané ;
mettre en correspondance l'unité de stockage virtuelle (300) de données originales et l'unité de stockage virtuelle de données d'aperçu instantané avec des unités de stockage physiques du système de stockage distribué (200) après réception d'une demande d'exportation ; et
obtenir les données originales et les données d'aperçu instantané du système de stockage distribué (200).

12. Un ou plusieurs supports lisibles par ordinateur, encodés avec des instructions d'accès à des données de machine virtuelle qui, lorsqu'elles sont exécutées par un processeur (105) d'un ordinateur, effectuent des actions comprenant les étapes suivantes :
au niveau d'un module de traitement des demandes d'accès (101) :
recevoir une demande d'accès aux données d'une machine virtuelle et mettre en correspondance la demande d'accès aux données avec une unité de stockage virtuelle d'un disque virtuel (103) qui correspond à une unité de stockage physique d'un système de stockage distribué (200) ; et
ajouter la demande d'accès aux données à un tableau de demandes (300),
et, au niveau d'un module mandataire de transfert de données (102) mis en œuvre par une pluralité de fils d'exécution activés simultanément correspondant au tableau de requêtes :
obtenir la demande d'accès aux données à partir du tableau de demandes (300), et
obtenir les données depuis l'unité de stockage physique sur la base de la demande d'accès aux données.

13. Un ou plusieurs supports lisibles par ordinateur tels que décrits dans la revendication 12, où le procédé comprend en outre les étapes suivantes :
créer un emplacement de cache frontal pour stocker les données en réponse à la détermination que la mémoire cache frontale ne stocke pas les données ; et
créer un emplacement de cache arrière pour stocker les données en réponse à la détermination que la mémoire cache arrière ne stocke pas les données.

14. Un ou plusieurs supports lisibles par ordinateur tels que décrits dans la revendication 12, où l'obtention des données, la création de l'emplacement de cache frontal et la création de l'emplacement de cache arrière sont exécutées simultanément.

15. Un ou plusieurs supports lisibles par ordinateur tels que décrits dans la revendication 12, comprenant en outre l'exécution des étapes suivantes :
obtenir une unité de stockage virtuelle d'une partition de disque virtuel (103) de données originales et une unité de stockage virtuelle d'une partition de disque virtuel de données d'aperçu instantané à partir de la partition de mappage après réception d'une demande d'aperçu instantané de données ;
mettre en correspondance l'unité de stockage virtuelle de données originales et l'unité de stockage virtuelle de données d'aperçu instantané avec des unités de stockage physiques du système de stockage distribué (200) après réception d'une demande d'exportation ; et obtenir les données originales et les données d'aperçu instantané du système de stockage distribué (200).
